# EUROPEAN PATENT APPLICATION

(11) **EP 4 817 777 A1**
(43) Date of publication of application: **07.10.2026**
(21) Application number: 26165613.6
(22) Date of filing: 17.03.2026
(51) Int. Cl.: B23K 9/133, B23K 9/12, H02P 5/50

(54) **CONTROL SYSTEM FOR COORDINATED FEEDING OF WELDING WIRE IN A PUSH-PULL MOTOR SYSTEM**

(30) Priority: 20.03.2025 US 202519084933
(71) Applicant: The ESAB Group Inc., North Bethesda, MD 20852 (US)
(72) Inventor: de WILDE, Willem, Göteborg (SE); ERIKSSON, Oscar, Vallda (SE); KLEIVEN, Jimmy, Gothenburg (SE); LENNARTSSON, Daniel, Örebro (SE); PAUSSEN, Armand, Partille (SE); MACHADO, Rodrigo, Onsala (SE)
(74) Representative: Murgitroyd & Company

(57) **Abstract**

A control system and method for coordinated feeding of welding wire in a push-pull wire feeding motor system are provided. The method includes operating a pull motor to pull a welding wire from a welding wire source (502), operating a push motor to push the welding wire from the welding wire source (504), and regulating a speed of the push motor based on an amount of current being drawn by the pull motor (506).

## Description

### Field of the Disclosure

The present disclosure relates generally to welding equipment and, more particularly, to controlling the operation of two or more motors in a push-pull motor wire feeding system to convey a consumable wire electrode, or welding wire, toward a weld zone in a welding system.

### Background of the Disclosure

Many welding applications utilize a consumable wire electrode commonly referred to as "welding wire." The welding wire may be provided continuously through a welding torch utilizing various wire feeder technologies.

When feeding the welding wire through a welding gun or welding torch (or, more simply, "torch"), over distance or at angles in field environments, a "push-pull" motor system may be used. One motor (e.g., a pull motor) may be located in, or near, the torch and is configured to pull the wire from the welding wire source (e.g., a spool) to the torch. A second motor (e.g., a push motor) may be located remotely, such as at, or near, a wire feeder, where the welding wire is stored, and is configured to push the welding wire from the source toward the torch. The second (push) motor could also be located anywhere along the supply line of the welding wire between the source of the welding wire and the torch.

Based on the parameters required for a welding operation, operator preference or skill, or other factors, it is typically desirable to feed the welding wire at a predetermined speed such that a predetermined amount of welding wire is delivered over a predetermined period of time, via the torch, to the welding zone during a welding operation. Such steady pacing of the welding wire may result in improved welding results.

However, because no two motors (i.e., the pull motor and the push motor) are exactly alike, one motor may tend to feed welding wire with a greater power or speed than the other. These differences may cause the welding wire to incur unintended stress, in the form of, e.g., tension or compression, and may also cause increased wear on the motors if the action of one motor causes resistance to the other motor. This undesirable or unintended stress may also cause excess wear of an inner liner or a conduit through which the welding wire passes, thus potentially causing contamination of a weld pool.

Push-pull motor systems can also suffer from problems associated with predefined motor power/current splitting and with unsynchronized speed/speed control. There can also be differences in drive wheel diameters that can impact coordination between the motors.

Accordingly, there is a need for improved control of the motors in a push-pull motor system.

### Summary of the Disclosure

According to a first aspect of the present invention there is provided a method for operating a push-pull motor system in a welding system is described. The method includes operating a pull motor to pull a welding wire from a welding wire source, operating a push motor to push the welding wire from a welding wire source, and regulating a speed of the push motor based on an amount of current being drawn by the pull motor.

The method may further comprise regulating the speed of the push motor based on a comparison between the current being drawn by the pull motor and a pull motor target current.

The method may further comprise controlling the pull motor to operate at a target speed.

The method may further comprise altering a signal representative of the target speed based on a result of the comparison between the current being drawn by the pull motor and the pull motor target current; and generating an altered target speed signal.

The method may further comprise controlling the push motor to operate at a speed indicated by the altered target speed signal.

The method may further comprise regulating a speed of an upstream motor that is disposed upstream of the push motor based on an amount of current being drawn by the push motor.

The method may further comprise regulating a speed of the pull motor based on a target speed and a signal indicative of the speed of the pull motor, wherein optionally the signal indicative of the speed of the pull motor is at least one of a pull motor encoder signal, a tachogenerator signal, or a signal indicative of back electromotive force.

Preferably, regulating the speed of the push motor is further based on at least one of a push motor encoder signal indicative of the speed of the push motor, a tachogenerator signal, or a signal indicative of back electromotive force.

The method may further comprise regulating the speed of the push motor using at least one of a proportional (P) or proportional-integral (PI) regulator.

According to a second aspect of the present invention there is provided a system comprising: a pull motor configured to pull a welding wire from a welding wire source, a push motor configured to push the welding wire from the welding wire source toward the pull motor, and a slack regulator configured to regulate a speed of the push motor based on an amount of current being drawn by the pull motor.

Preferably, the slack regulator is configured to regulate the speed of the push motor based on a comparison between the current being drawn by the pull motor and a pull motor target current.

The system may further comprise a pull motor regulator that is configured to control the pull motor to operate at a target speed.

The system may further comprise a modifier configured to: alter a signal representative of the target speed based on a result of the comparison between the current being drawn by the pull motor and the pull motor target current; and generate an altered target speed signal.

The system may further comprise a push motor regulator configured to: receive the altered target speed signal; and control the push motor to operate at a speed indicated by the altered target speed signal.

According to a third aspect of the present invention there is provided a method. The method comprises altering a signal representative of a target speed of a pull motor to generate an altered target speed, and supplying the altered target speed to a push motor regulator to regulate a speed of a push motor, wherein an altering factor used to generate the altered target speed is based on a value of current being supplied to the pull motor.

Preferably, the altering factor used to generate the altered target speed is based on a pull motor target current.

The method may further comprise generating, based on the altered target speed, a pulse width modulation (PWM) signal to control the speed of the push motor.

The method may further comprise comparing, in the push motor regulator, the altered target speed to a signal indicative of a speed of the push motor.

Preferably, the signal indicative of a speed of the push motor is at least one of a push motor encoder value, a tachogenerator signal, or a signal indicative of back electromotive force.

### Brief Description of the Drawings

By way of example, embodiments of the disclosed systems and methods will now be described, with reference to the accompanying drawings, in which:
FIG. 1 is a block diagram of a welding system including a pull (primary) motor and a push (secondary) motor for conveying, or feeding, welding wire through a welding torch toward a weld zone, in accordance with an example embodiment.
FIG. 2A is a block diagram showing a motor control system configured with two motors, including a slack regulator, in accordance with an example embodiment.
FIG. 2B is a block diagram showing a motor control system configured with multiple motors, including a slack regulator for each upstream motor, in accordance with an example embodiment.
FIG. 3 shows a table of the relative values of several signals that are monitored and shared, as depicted in FIG. 2, to account for, and be responsive to, too little slack and too much slack, in the welding wire during a welding wire feeding operation, in accordance with an example embodiment.
FIG. 4 is a block diagram showing a cascade regulator that could be employed for the pull motor regulator and/or the push motor regulator depicted in FIG. 2, according to an example embodiment.
FIG. 5 is a flowchart depicting a series of operations for executing a push-pull motor control system including a slack regulator, according to an example embodiment.
FIG. 6 is a flowchart depicting another series of operations for executing a push-pull motor control system, according to an example embodiment.

### Detailed Description

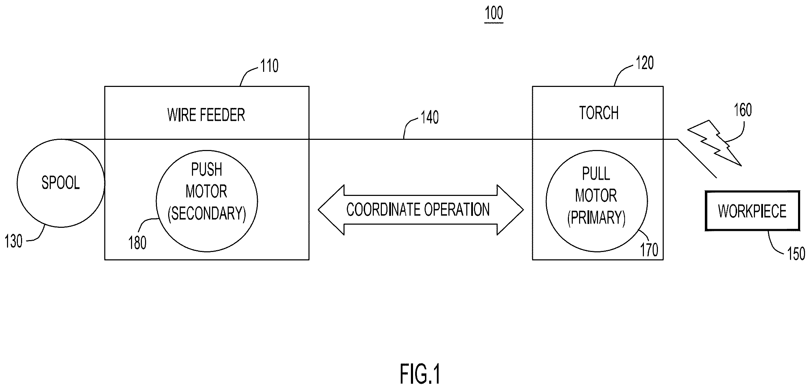

FIG. 1 is a block diagram of a welding system 100 including a pull (primary) motor and a push (secondary) motor for conveying, or feeding, welding wire through a welding torch toward a weld zone, in accordance with an example embodiment. More specifically, welding system 100 includes a wire feeder 110 and a welding torch (or "torch") 120. Welding wire 140, supplied from a spool 130 (i.e., a welding wire source), is fed from the wire feeder 110 to the torch 120, via an appropriate conduit and/or liner (not shown), and is output towards a workpiece 150 in the presence of an electric arc 160. A typical welding process in this context may be a Gas Metal Arc Welding (GMAW) process in which the torch 120 also outputs, simultaneously with the welding wire 140, an active (pure or mixed) or an inert shielding gas to prevent unwanted oxidation in the weld zone.

As shown in FIG. 1, the welding wire 140 is conveyed or fed using (at least) two motors: a pull motor 170 (which may also be referred to as a "primary motor" 170) and a push motor 180 (which may also be referred to as a "secondary motor" 180). It is preferable that the speed of these two motors be synchronized or regulated so that the welding wire 140 is not subjected to undesirable tension or compression, each of which can lead to wire feeding problems. The embodiments described herein provide control mechanisms that help to coordinate the operation of the push motor 180 and the pull motor 170 and thereby enable the welding wire 140 to be conveyed in a smooth and efficient manner through a conduit/liner and to the weld pool.

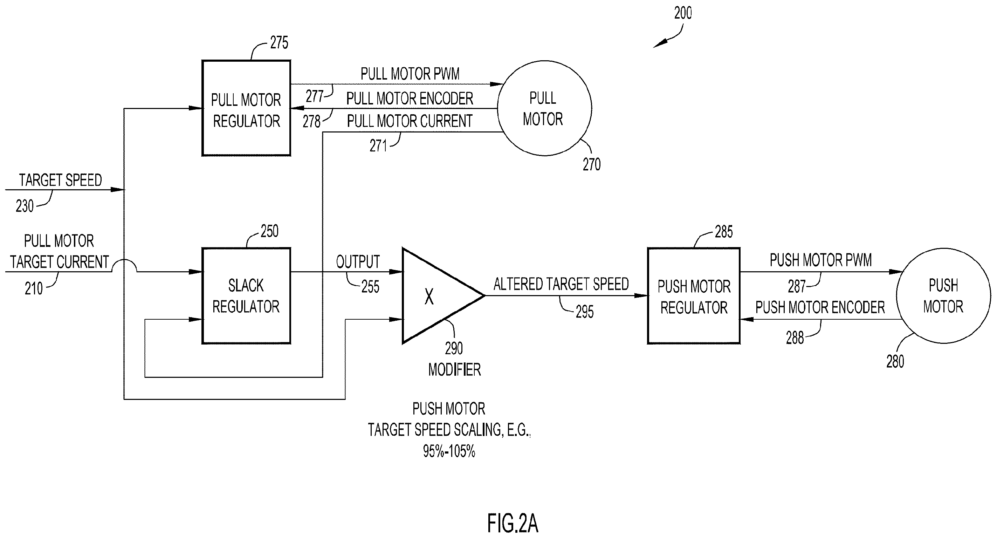

FIG. 2A is a block diagram showing a motor control system 200 configured with two motors, including a "slack" regulator 250, in accordance with an example embodiment. More specifically, FIG. 2A shows a pull motor 270, which may also be referred to as a "downstream" motor, and a push motor 280, which may also be referred to as an "upstream" motor. A pull motor regulator 275 controls the power supplied to pull motor 270 via a pull motor pulse width modulation (PWM) signal 277. A push motor regulator 285 controls the power supplied to push motor 280 via a push motor PWM signal 287.

The pull motor regulator 275 and the push motor regulator 285 may be considered "speed" regulators and are configured to compare a reference value to a value representative of speed of the pull motor 270 and push motor 280, respectively. In the embodiment illustrated in FIG. 2A, a pull motor encoder signal 278 and a push motor encoder signal 288 are fed back to the pull motor regulator 275 and the push motor regulator 285, respectively.

In the case of pull motor regulator 275, the reference value is a target speed 230. The target speed 230 may be input to the motor control system 200 by a user via a user interface (not shown). The selected target speed 230 may be tied to, or selected based on, the welding process that the user has also selected. Thus, the target speed 230 could be manually entered or be automatically set given other user entries into the motor control system 200. Pull motor regulator 275 is configured to compare the target speed 230 (the reference value) to the pull motor encoder signal 278 and determine whether the pull motor is turning too slowly or too fast with respect to the target speed 230. If the pull motor 270 is turning too slowly, the pull motor regulator 275 is configured to increase the duty cycle of the pull motor PWM signal 277 to cause the pull motor to increase its speed. On the other hand, if the pull motor 270 is turning too fast, the pull motor regulator 275 is configured to decrease the duty cycle of the pull motor PWM signal 277 to cause the pull motor 270 to decrease its speed.

The speed of the push motor 280 is controlled in a similar manner by push motor regulator 285, but, as will be explained further below, the reference value used by the push motor regulator 285 is not necessarily the target speed 230, but is a manipulated, modified, scaled, or altered version of the target speed 230, i.e., altered target speed 295, as shown in FIG. 2A.

Push motor regulator 285 is configured to compare the altered target speed 295 (the reference value) to the push motor encoder signal 288 and determine whether the push motor 280 is turning too slowly or too fast with respect to the altered target speed 295. If the push motor 280 is turning too slowly, the push motor regulator 285 is configured to increase the duty cycle of the push motor PWM signal 287 to cause the push motor 280 to increase its speed. On the other hand, if the push motor 280 is turning too fast, the push motor regulator 285 is configured to decrease the duty cycle of the push motor PWM signal 287 to cause the push motor 280 to decrease its speed.

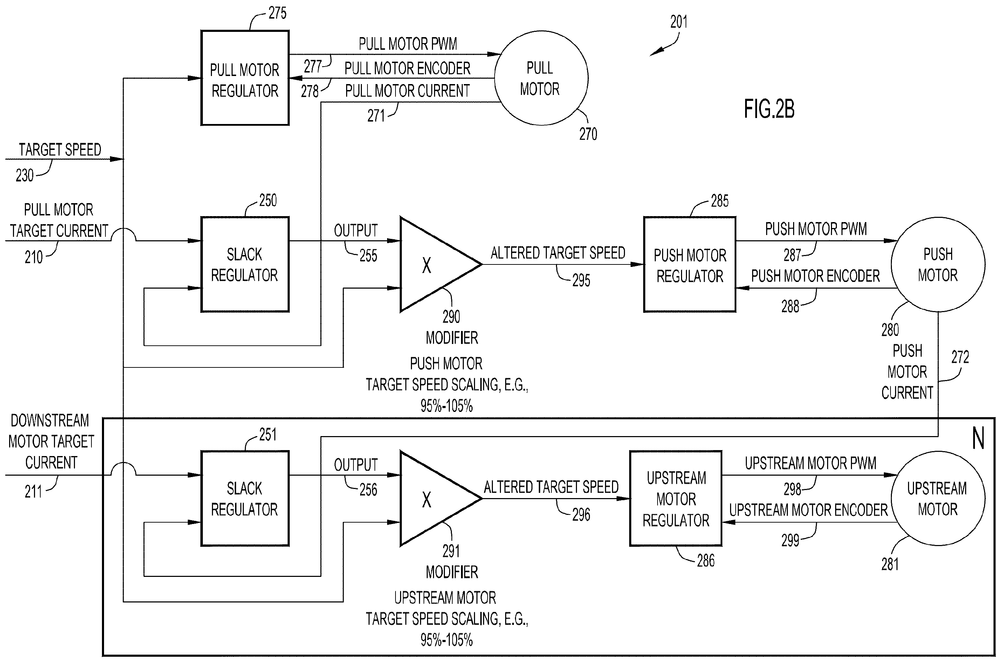

As explained previously, one problem in a push-pull wire feed system is the possible mismatch between motors, and/or other factors, that can cause the welding wire 140 to experience too much tension or too much compression between the motors. That is, the welding wire 140 might experience too little slack or too much slack between pull motor 270 and push motor 280. In this regard, slack regulator 250 is provided, as shown in FIG. 2, as part of a master control loop that coordinates the operation (e.g., speed) of the push motor 280 to control the amount of slack that is present in the welding wire 140 between the two motors and thereby alleviate, or possibly eliminate, the existence of an improper amount of slack in the welding wire 140. In an embodiment, in regulating the amount of slack, the slack regulator 250 causes the speed of the push motor 280 to dynamically increase or decrease responsive to the torque being applied by the pull motor 270.

More specifically, and still referring to FIG. 2A, slack regulator 250 is configured to compare a value representative of pull motor current 271 to a reference value, namely a pull motor target current 210, which could be a predetermined constant, given the target speed 230. The pull motor target current 210 could be a predefined constant for a given torch and hose setup, a previously-measured value, or could be set dynamically, e.g. as a function of electrical current consumed by other motors. It is noted that FIG. 2A shows a measure indicative of pull motor current 271 being supplied to slack regulator 250. Those skilled in the art, however, will appreciate that proxy measurements or estimations of current may alternatively be supplied. For instance, the pull motor electric current can be calculated quite accurately based on the motor speed and PWM duty cycle. In other words, different measures could be used to directly or indirectly represent pull motor current.

Because motor current is approximately proportional to torque, the measurement of motor current constitutes a proxy measurement of force being applied to the welding wire 140. Thus, a change in the current being supplied to pull motor 270 suggests a change in needed torque to maintain a predetermined speed, i.e., the target speed 230. Accordingly, and as an example, consider a scenario in which pull motor 270 finds itself needing to apply increased force (torque) to achieve target speed 230. This increased force (torque) is monitored as excess/increased current being drawn by pull motor 270. An unexpected increase in current suggests that there is insufficient slack (or, alternatively, too much tension) in the welding wire 140 being fed through the pull motor 270. This means that the push motor 280 is likely running too slowly, and thus not feeding sufficient welding wire 140 toward pull motor 270 to provide enough slack to enable pull motor 270 to run at the pull motor target current 210.

The slack regulator 250 addresses this scenario and compensates for the mismatch. Specifically, the value representative of pull motor current 271 is supplied to slack regulator 250, which compares that value with the reference value, namely the pull motor target current 210. Slack regulator 250 outputs a signal 255 indicative of a difference between the pull motor current 271 and the pull motor target current 210. In the instant scenario, the pull motor current 271 is higher than the pull motor target current 210. A modifier 290, such as a scaler, is configured to receive the output signal 255 and to scale (or modify or alter) the target speed 230, accordingly, to generate altered target speed 295 that is supplied to push motor regulator 285. The altered target speed 295 is effectively a manipulated version of the target speed 230 to provoke push motor regulator 285 to, in this case, increase the duty of the push motor PWM signal 287.

That is, modifier 290 is configured to scale or alter the target speed 230, to modify target speed 230 to the altered target speed 295 (the reference value for push motor regulator 285) so as to cause, in this scenario, push motor 280 to increase its speed to generate more slack in the welding wire 140, thus causing, ultimately, decreased excess torque needed to be applied by pull motor 270, and thus, over time, causing the speeds of the pull motor 270 and push motor 280 to be coordinated such that there is a desired/optimal amount of slack on the welding wire 140. This scaling/altering occurs as pull motor current 271 converges with pull motor target current 210. The system will cause push motor 280 to speed up or slow down depending on the state of slack (indicated by torque applied by pull motor 270) in the welding wire 140. Altered target speed 295 could be generated based on a multiplier (e.g., 95%-105%) of target speed 230, based on a value added to or subtracted from target speed 230, or based on some other mathematical relationship associated with target speed 230.

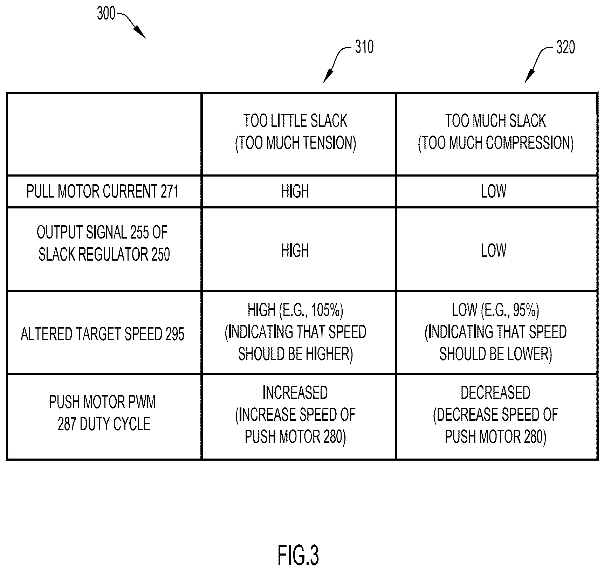

FIG. 3 shows a table 300 of the relative values of several signals that are monitored and/or shared, as depicted in FIG. 2A, to account for, and be responsive to, too little slack or too much slack in welding wire 140, in accordance with an example embodiment. Column 310 represents the scenario in which there is too little slack (i.e., too much tension) in the welding wire 140. In such a scenario, pull motor current 271 will be higher than expected, the output signal of slack regulator 250 will, accordingly, be high, the altered target speed 295 would therefore be set to a higher value, and the duty cycle of the push motor PWM 287 will be increased, thus increasing the speed of the push motor 280 and increasing the amount of slack in the welding wire.

Column 320, on the other hand, represents the scenario in which there is too much slack (i.e., too much compression) in the welding wire 140. In such a scenario, pull motor current 271 will be lower than expected, the output signal of slack regulator 250 will, accordingly, be low, the altered target speed 295 would therefore be set to a lower value, and the duty cycle of the push motor PWM 287 will be decreased, thus decreasing the speed of the push motor 280 and decreasing the amount of slack in the welding wire.

After a perturbation in the system resulting in too much slack or too little slack in welding wire 140, and/or motor mis-match, the described control system 200 in FIG. 2A will converge to a steady state equilibrium. It is noted that the values shown in table 300 may be analog or digital signals having a range of values across a predetermined band.

As those skilled in the art will appreciate, the several regulators depicted in FIG. 2 can be implemented as proportional (P) or proportional-integral (PI) regulators, with possible model-based feed-forward components.

Also, it is noted that differences in motor characteristics and inertia can result in transient differences in feed speeds. According to the disclosed embodiments, these transients can be mitigated through (dynamic) control parameter tuning, processing reference value set points, or other event handling.

FIG. 2B is a block diagram showing a motor control system 201 configured with multiple motors, including a slack regulator for each upstream motor, in accordance with an example embodiment. More specifically, FIG. 2B illustrates how the use of slack regulator 250 can be expanded to help regulate one or more additional motors beyond push motor 280. As noted, push motor 280, which is downstream from upstream motor 281, may be referred to as an "upstream" motor, i.e., upstream from pull motor 270 and closer to, e.g., spool 130 or other source of welding wire 140. The top part of FIG. 2B is the same as the system shown in FIG. 2A. The bottom part of FIG. 2B shows slack regulator 251 that is configured to coordinate the speed of upstream motor 281. In FIG. 2B, the goal is to regulate or coordinate the speed of upstream motor 281 with respect to push motor 280, target speed 230 and downstream motor target current 211.

More specifically, a value representative of push motor current 272, or more generally, a downstream motor current, is supplied to slack regulator 251, which compares that value with downstream motor target current 211. Downstream motor target current 211 could be a predefined constant for a given torch and hose setup, a previously-measured value, or could be set dynamically, e.g. as a function of electrical current consumed by other motors. Slack regulator 251 outputs a signal 256 indicative of a difference between the push motor current 272 and the downstream motor target current 211. In a possible embodiment, the input to slack regulator 250 and/or 251 could consist of multiple motor currents 271 and/or 272, which along with corresponding target motor currents 210 and/or 211 would be mathematically combined, for instance as a weighted sum. In a scenario in which the push motor 280 is drawing increased current (indicating that there is insufficient slack between the push motor and the upstream motor 281), push motor current 272 is higher than the downstream motor target current 211. A modifier 291, such as a scaler, is configured to receive the output signal 256 and to scale (or modify or alter) the target speed 230, accordingly, to generate altered target speed 296 that is supplied to upstream motor regulator 286. The altered target speed 296 is effectively a manipulated version of the target speed 230 to provoke upstream motor regulator 286 to, in this case, increase the duty of upstream motor PWM signal 298. The upstream motor regulator 286 may be considered a "speed" regulator and is configured to compare a reference value to a value representative of speed of the upstream motor 281. As shown, an upstream motor encoder signal 299 is fed back to the upstream motor regulator 286 and upstream motor regulator 286 compares this value to the altered target speed 296.

That is, modifier 291 is configured to scale or alter the target speed 230, to modify target speed 230 to the altered target speed 296 (the reference value for upstream motor regulator 286) so as to cause, in this scenario, upstream motor 281 to increase its speed to generate more slack in the welding wire 140, thus causing, ultimately, decreased excess torque needed to be applied by push motor 280, and thus, over time, causing the speeds of the push motor 280 and upstream motor 281 (and pull motor 270) to be coordinated such that there is a desired/optimal amount of slack on the welding wire 140 between each motor in the chain. This scaling/altering occurs as pull motor current 271 converges with pull motor target current 210. The system will cause push motor 280 and upstream motor 281 to speed up or slow down depending on the state of slack (indicated by torque applied by pull motor 270 and push motor 280) in the welding wire 140. Altered target speed 296 could be generated based on a multiplier (e.g., 95%-105%) of target speed 230, based on a value added to or subtracted from target speed 230, or based on some other mathematical relationship associated with target speed 230.

Thus, those skilled in the art will appreciate that any number N of additional motors can be added upstream from pull motor 270 and the speed of each such additional motor can be regulated using a slack regulator, 250, 251, etc.

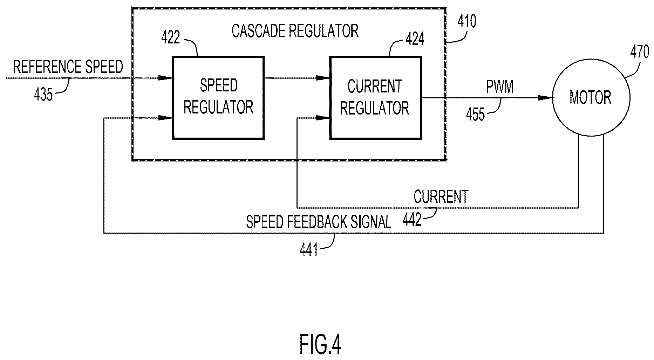

FIG. 4 shows a block diagram of a cascade regulator 410 that could be implemented for either the pull motor regulator 275, the push motor regulator 285, or upstream motor regulator 286, in accordance with an example embodiment. In some implementations, the use of cascade regulator 410 may be more desirable than the simpler regulators depicted in FIG. 2A and FIG. 2B.

Cascade regulator 410 includes a speed regulator 422 and a current regulator 424. As can be seen in FIG. 4, cascade regulator 410 includes two control or feedback loops: a first, outer, feedback loop 441 and a second, inner, feedback loop 442. First, outer, feedback loop 441 supplies a value indicative of the speed of the motor 470, i.e., a speed feedback signal. That value (or signal) could be an encoder value (depicted, and also shown in FIG. 2), a value from a tachogenerator, a value of back electromotive force ("back EMF") generated by motor 470, or other value indicative of speed of motor 470. The fed back value is supplied to speed regulator 422, which compares the fed back value to a reference speed 435 (e.g., wire feed speed) provided, e.g., by an operator of the welding system, via a user interface (not shown). The output of speed regulator 422 is supplied to current regulator 424 as a reference value. The second, inner, feedback loop 442 supplies a value indicative of current being drawn by the motor 470. The current regulator 424 compares the output of speed regulator 422 with the value indicative of current being drawn by the motor 470 and, responsive to the comparison, generates a pulse width modulation (PWM) signal 455 to control the speed of the motor 470. That is, PWM signal 455 is used to control the application of electric power being supplied to motor 470.

In the case where cascade regulator 410 is used for pull motor regulator 275 in FIG. 2, the reference speed 435 would correspond to the target speed 230. In the case where cascade regulator 410 is used for push motor regulator 285 in FIG. 2A or FIG. 2B, the reference speed 435 would correspond to the altered target speed 295.

Notably, speed regulator 422 and current regulator 424 may operate at different frequencies, with the speed regulator 422 operating more slowly than the current regulator 424. For example, in one possible implementation, the speed regulator 422 operates at a slower frequency (e.g., on the order of 1 kHz) than the current regulator 424 (which may operate at a frequency on the order of 10 kHz). Those skilled in the art will appreciate that the particular frequency values are merely examples, and other values may be implemented based on a given particular scenario. In many cases, though, the second, inner, feedback loop 442 operates at a higher frequency than the first, outer, feedback loop 441 since it may be easier/quicker to monitor current changes than indications of speed changes. Those skilled in the art will appreciate that the fed back values being supplied to speed regulator 422 and the current regulator 424 may be scaled/converted to appropriate values (e.g., respective voltages) so that the reference values and fed back values can be accurately compared to one another.

In any event, using a faster inner loop and a slower outer loop in the cascade regulator 410 enables the speed of the motor 470 to be better regulated to the desired speed. More specifically, and as noted, a change in speed may be observed more quickly by monitoring the motor current compared to waiting for a slower response from, e.g., a motor encoder (even if the speed regulator 422 and the current regulator 424 are operating at the same or similar frequencies). By acting on the change of motor current to maintain the speed (by increasing or decreasing PWM duty cycle) a more stable speed with less fluctuation may be achieved compared to using only the speed measurement as the single source for regulation.

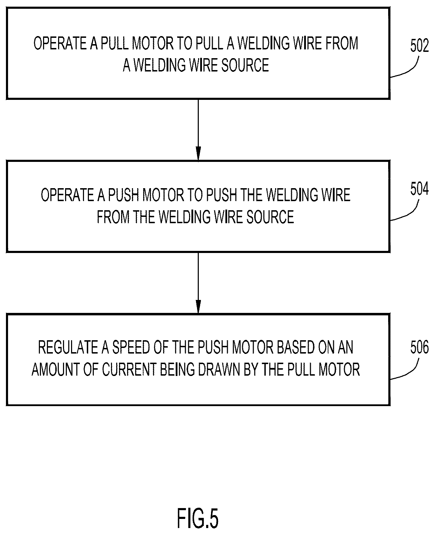

FIG. 5 is a flowchart depicting a series of operations for executing a push-pull motor control system including a slack regulator, according to an example embodiment. At 502, an operation includes operating a pull motor to pull a welding wire from a welding wire source. At 504, an operation includes operating a push motor to push the welding wire from the welding wire source. And, at 506, an operation includes regulating a speed of the push motor based on an amount of current being drawn by the pull motor. Those skilled in the art will appreciate that the several operations are effectively happening concurrently to coordinate the speeds of the two (or more) motors.

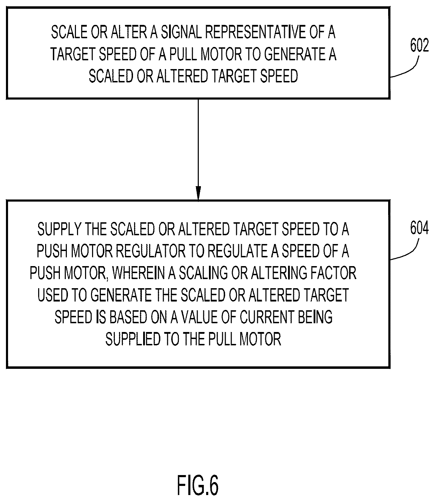

FIG. 6 is a flowchart depicting another series of operations for executing a push-pull motor control system, according to an example embodiment. At 602, an operation includes scaling or altering a signal representative of a target speed of a pull motor to generate a scaled or altered target speed, and, at 604, an operation includes supplying the scaled or altered target speed to a push motor regulator to regulate a speed of a push motor, wherein a scaling or altering factor used to generate the scaled or altered target speed is based on a value of current being supplied to the pull motor. Those skilled in the art will appreciate that the operations in FIG. 6 are effectively happening concurrently to coordinate the speeds of the two motors.

As shown in FIG. 2A and FIG. 2B, the scaling or altering of the target speed of the push motor 280 or upstream motor 281 may be executed in response to an output of a "slack" regulator 250, 251 that is responsive to the torque being applied by the pull motor 270 or push motor 280, wherein the torque is representative of slack in welding wire.

Thus, those skilled in the art will appreciate that the embodiments described herein provide a unique approach to synchronizing, controlling, or regulating the speeds of motors in a push-pull motor system that conveys welding wire in a welding system.

The above description is intended by way of example only. Various modifications and structural changes may be made therein without departing from the scope of the concepts described herein and within the scope and range of equivalents of the claims.

## Claims

1. A method comprising:
operating a pull motor to pull a welding wire from a welding wire source;
operating a push motor to push the welding wire from the welding wire source; and
regulating a speed of the push motor based on an amount of current being drawn by the pull motor.

2. The method of claim 1, further comprising regulating the speed of the push motor based on a comparison between the current being drawn by the pull motor and a pull motor target current.

3. The method of claim 2, further comprising controlling the pull motor to operate at a target speed.

4. The method of claim 3, further comprising altering a signal representative of the target speed based on a result of the comparison between the current being drawn by the pull motor and the pull motor target current; and
generating an altered target speed signal; and optionally
controlling the push motor to operate at a speed indicated by the altered target speed signal.

5. The method of claim 1, further comprising:
regulating a speed of an upstream motor that is disposed upstream of the push motor based on an amount of current being drawn by the push motor; or
regulating a speed of the pull motor based on a target speed and a signal indicative of the speed of the pull motor, wherein optionally the signal indicative of the speed of the pull motor is at least one of a pull motor encoder signal, a tachogenerator signal, or a signal indicative of back electromotive force.

6. The method of claim 1, wherein regulating the speed of the push motor is further based on at least one of a push motor encoder signal indicative of the speed of the push motor, a tachogenerator signal, or a signal indicative of back electromotive force.

7. The method of claim 1, further comprising regulating the speed of the push motor using at least one of a proportional (P) or proportional-integral (PI) regulator.

8. A system, comprising:
a pull motor configured to pull a welding wire from a welding wire source;
a push motor configured to push the welding wire from the welding wire source toward the pull motor; and
a slack regulator configured to regulate a speed of the push motor based on an amount of current being drawn by the pull motor.

9. The system of claim 8, wherein the slack regulator is configured to regulate the speed of the push motor based on a comparison between the current being drawn by the pull motor and a pull motor target current.

10. The system of claim 9, further comprising a pull motor regulator that is configured to control the pull motor to operate at a target speed.

11. The system of claim 10, further comprising a modifier configured to:
alter a signal representative of the target speed based on a result of the comparison between the current being drawn by the pull motor and the pull motor target current; and
generate an altered target speed signal.

12. The system of claim 11, further comprising a push motor regulator configured to:
receive the altered target speed signal; and
control the push motor to operate at a speed indicated by the altered target speed signal.

13. A method, comprising:
altering a signal representative of a target speed of a pull motor to generate an altered target speed; and
supplying the altered target speed to a push motor regulator to regulate a speed of a push motor,
wherein an altering factor used to generate the altered target speed is based on a value of current being supplied to the pull motor.

14. The method of claim 13, wherein the altering factor used to generate the altered target speed is based on a pull motor target current.

15. The method of claim 13, further comprising:
generating, based on the altered target speed, a pulse width modulation (PWM) signal to control the speed of the push motor; and optionally
comparing, in the push motor regulator, the altered target speed to a signal indicative of a speed of the push motor, wherein optionally the signal indicative of a speed of the push motor is at least one of a push motor encoder value, a tachogenerator signal, or a signal indicative of back electromotive force.
